Europäisches Patentamt

European Patent Office

Office européen des brevets

(11) Veröffentlichungsnummer: **0 510 313 A1**

# (12) EUROPÄISCHE PATENTANMELDUNG

(21) Anmeldenummer: **92102239.8**

(22) Anmeldetag: **11.02.92**

(51) Int. Cl.5: **B29B 17/00**, B30B 9/30,
B23D 47/04, B26F 3/12

(30) Priorität: **15.04.91 DE 4112267**
**10.12.91 DE 4140577**

(43) Veröffentlichungstag der Anmeldung:
**28.10.92 Patentblatt 92/44**

(84) Benannte Vertragsstaaten:
**AT BE CH DE DK ES FR GB GR IT LI LU NL PT
SE**

(71) Anmelder: **Wilfried Pavel Maschinenbau
Gewerbestrasse 4
W-4802 Halle/Westf.(DE)**

(72) Erfinder: **Pavel, Wilfried
Gewerbestrasse 4
W-4802 Halle/Westf.(DE)**

(74) Vertreter: **Hanewinkel, Lorenz, Dipl.-Phys.
Patentanwalt Ferrariweg 17a
W-4790 Paderborn(DE)**

(54) **Vorrichtung zur Bildung einer kompakten Kunststoffmasse aus gebrauchten Kunstoffolien und/oder Kunststoffolien-Abfällen.**

(57) Die Vorrichtung zur Bildung einer kompakten Kunststoffmasse aus gebrauchten Kunststoffolien und/oder Kunststoffolienabfällen ist als mobiler Komapktor ausgeführt und besitzt einen mindestens einen Saugluftanschluß (2,3) und einen Folien-Zuführanschluß (4) aufweisenden, langgestreckten Kanal (1), in dem ein hin- und herverschiebbarer, die beiden Anschlüsse (2,3/4) im Wechsel freigebender und den Folien-Zuführanschluß (4) voll und den Saugluftanschluß (2,3) teilweise absperrender Preßkolben (5/51,52) und in Kolbenpreßrichtung (A) im Abstand dahinter eine elektrische, die Folien- und -abfälle im Durchlauf zu einem gepreßten Strang (6) zusammenschmelzende Heizeinrichtung (7) angeordnet sind.

Der Heizeinrichtung (7) ist eine Trenneinrichtung, vorzugsweise Säge (28), nachgeschaltet, mit der der gebildete Strang in einzelne Strangstücke aufgeteilt wird.

Fig. 2

EP 0 510 313 A1

Die Erfindung bezieht sich auf eine Vorrichtung zur Bildung einer kompakten Kunststoffmasse aus gebrauchten Kunststofffolien und/oder Kunststofffolien-Abfällen.

In der Bekleidungsindustrie fallen beim Verpakken der Bekleidungsstücke in Kunststoff-Schlauchfolien Folienabfälle an und im Handel, beim späteren Auspacken der Bekleidungsstücke, stellen die dann gebrauchten Kunststoff-Schlauchfolien einen lästigen Abfall dar.

Die gebrauchten Kunststoffolien und die Folienabfälle lassen sich schwer beseitigen und werden von der Industrie in der vorliegenden Form nicht zurückgenommen.

Aufgabe der Erfindung ist es deshalb, eine Vorrichtung zu schaffen, mit der in einfacher und rationeller Weise die gebrauchten Kunststoffolien und/oder Folienabfälle zu einer kompakten Masse zusammengefaßt werden, die dann in einfacher Weise recyclebar ist; dabei soll diese Vorrichtung einfach und kostengünstig und kompakt aufgebaut sein, eine rationelle Arbeitsweise ermöglichen und an Verpackungsmaschinen integrierbar sowie auch als eigenständiges mobiles Gerät nutzbar sein.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Die erfindungsgemäße Vorrichtung stellt einen mobilen Kompaktor dar, mit dem in wirtschaftlicher Weise die im Handel anfallenden gebrauchten Verpackungsfolien und die in der Bekleidungsindustrie beim Verpacken der Bekleidungsstücke entstehenden Folienabfälle zu einem Kunststoffstrang zusammengepreßt und verschmolzen werden, der dann in einzelne Strangabschnitte abtrennbar ist. Die abgetrennten Strangabschnitte bilden dann eine kompakte, dicht zusammengepreßte Kunststoffmasse, die dann in einfacher Weise recyclebar ist.

Die Vorrichtung ist einfach und kostengünstig aufgebaut und arbeitet in einem langgestreckten Kanal mit einem oder zwei wechselweise auf die zugeführten Kunststoffabfälle pressend einwirkende Kolben, die die Kunststoffabfälle durch eine Heizeinrichtung drücken, in der die Abfälle zusammengeschmolzen werden.

Der austretende Kunststoffstrang wird dann durch eine Säge oder elektrisch beheizte Trenneinrichtung abgeschnitten. Durch die Heizeinrichtung im Kanal wird der Strang auf seinem Umfang mit Schweiß- und Schmelznähten und durch die Trenneinrichtung an den Stirnenden ebenfalls durch Schweiß- und Schmelznähte zu einer kompakten Einheit zusammengehalten.

Die Kunststoffabfälle werden durch einen Sauganschluß aus einer Zuführung in den Kanal eingesaugt und durch die beiden wechselweise arbeitenden Kolben ist immer ein Zuführ- und Saugbereich frei, und die Kolben arbeiten wechselweise für den Schiebe- und Pressvorgang.

Bei Einsatz nur eines Kolbens ist der Kanal mit zwei getrennten Saugkammern und zwei Saugluftanschlüssen und einem durch eine Saugkammer hindurch zum Kanal geführten Folienzuführanschluß ausgestattet. Durch diese Ausführung wird ständig Folie angesaugt, auch wenn der Kolben vorn steht und die Saugluftwirkung absperrt, da die eine Saugkammer immer mit dem Folienzuführanschluß in Saugverbindung steht und somit die Folie ständig bis vor/auf den Kolben gesogen wird und dadurch beim Zurückfahren des Kolbens sofort zur Verfügung steht.

Die höhenverschwenkbare Kreissäge gewährleistet ein einwandfreies Strangtrennen und durch die angeschlossene Saugleitung werden die anfallenden Späne und Staubteilchen zur Schaffung eines sauberen Arbeitsplatzes abgesaugt.

Der Strang wird durch einen einstellbaren Endschalter in seiner abzutrennenden Länge eingestellt und beim Betätigen des Endschalters wird die Säge automatisch eingeschaltet und nach dem Abtrennen das Strangstück durch Auswerfer automatisch aus der Führung ausgeworfen.

Der Antrieb des Kolbens erfolgt über einen elektrischen Antriebmotor mit Kurbeltrieb, was einen hohen Preßdruck des Kolbens ermöglicht.

Dieser mobile Kompaktor ermöglicht eine hohe Durchsatzleistung, hat eine robuste Bauweise und arbeitet mit sehr großen Druckkräften.

Der Saugschlauch für die Folien läßt sich vom Folien-Einwerfkasten abnehmen und dann als Staubsauger benutzen, in dem an den Saugschlauch vorn ein Adapter mit Saugdüse angesetzt wird; hierbei wird der Staub in den Auffangsack gefördert und eventuelle Grobteile bleiben im Kanal zurück und werden dann mit kompaktiert.

Diese Vorrichtung läßt sich in günstiger Weise an eine Verpackungsmaschine, sowohl bei hängender Verpackung als auch bei flachliegender Verpackung integrieren, und sie kann auch in dem Handel, z.B. in Warenhäusern, beim Auspacken der Bekleidungsstücke als separates mobiles Gerät genutzt werden.

Es liegt im Rahmen der Erfindung, mit dieser Vorrichtung nicht nur gebrauchte Schlauchfolien und/oder Folienabfälle zu einer kompakten Kunststoffmasse zusammenzubringen, sondern es können auch andere Kunststoffabfällen in dieser Vorrichtung stranggepreßt und verschmolzen werden.

Anhand der Zeichnungen wird nachfolgend ein Ausführungsbeispiel der Erfindung in Variation näher erläutert. Es zeigt:

Fig. 1    eine perspektivische Darstellung einer Vorrichtung zur Herstellung von Kunststoffsträngen aus Kunststoffolien und/oder Kunststoffabfällen,

Fig. 2 einen schematischen, vertikalen Längsschnitt derselben Vorrichtung mit Saug- und Preßkanal, darin hin- und herschiebbaren Preßkolben, am Kanal angeschlossenen Saugleitungen und Folienzuführleitung, im Kanal angeordneten Heizeinrichtung, dem Kanal nachgeschalteter Säge und das abgeschnittene Strangstück aufnehmenden und auswerfenden Führung,

Fig. 3 eine schematische Draufsicht auf dieselbe Vorrichtung,

Fig. 4 einen Querschnitt durch den Kanal mit Saugkammern, Saugluftanschlüssen und einem Folienzuführanschluß und im Kanal verschiebbaren Kolben,

Fig. 5 eine Stirnansicht der Vorrichtung mit einem den Kolben bewegenden Antrieb,

Fig. 6 eine zweite Stirnansicht der Vorrichtung mit Säge und Strangstückführung,

Fig. 7 einen Querschnitt durch eine Verkleidung der Vorrichtung, in der ein Späne- und Staubsack untergebracht ist,

Fig. 8 einen schematischen, vertikalen Längsschnitt durch die Vorrichtung in weiterer Ausführung,

Fig. 9 einen schematischen, horizontalen Längsschnitt durch die Vorrichtung nach Fig. 8,

Fig. 10 einen Querschnitt durch den Kanal der Vorrichtung im Zuführ- und Saugbereich für die Folien und -abfälle,

Fig. 11 eine Stirnansicht des Kanales der Vorrichtung im Schmelzbereich,

Fig. 12 eine Vorderansicht einer elektrischen Trenneinrichtung für die gebildeten Kunststoffstränge.

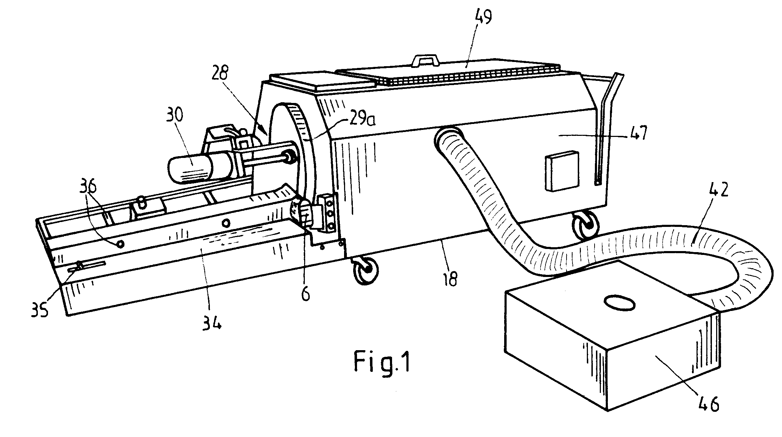

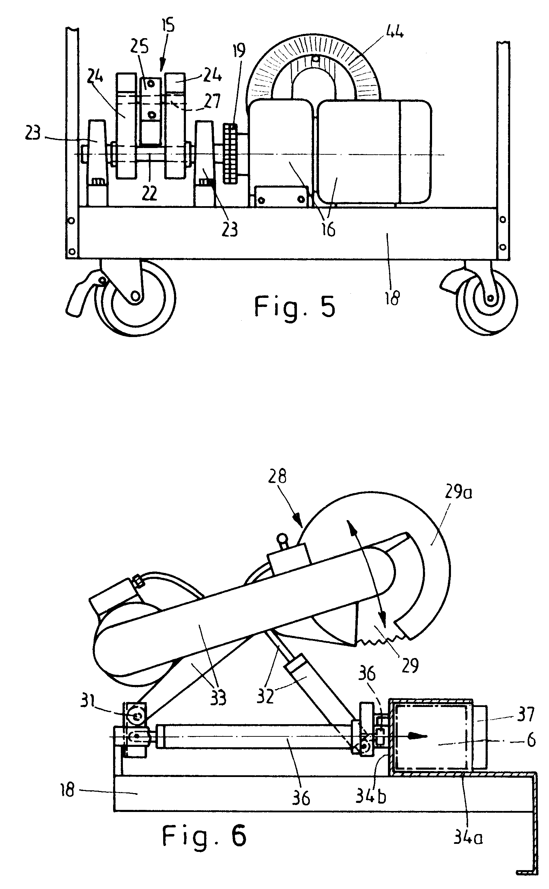

Die Vorrichtung (mobiler Kompaktor) zur Bildung einer kompakten Kunststoffmasse aus gebrauchten Kunststoffolien und/oder Kunststoffolien-Abfällen nach Fig. 1 bis 7 besitzt einen zwei Saugluftanschlüsse (2,3) und einen Folien-Zuführanschluß (4) aufweisenden, langgestreckten Kanal (1), in dem ein hin- und herverschiebbarer, die Anschlüsse (2,3/4) im Wechsel freigebender und den Folien-Zuführanschluß (4) voll und den Saugluftanschluß (2,3) teilweise absperrender Preßkolben (5) und in Kolben-Preßrichtung (A) im Abstand dahinter eine elektrische, die Folien- und abfälle im Durchlauf zu einem gepreßten Strang (6) zusammenschmelzende Heizeinrichtung (7) als Schweißorgan angeordnet sind.

Der Kanal (1) ist von einem Vierkantrohr, vorzugsweise Quadratrohr, gebildet und der Preßkolben (5) lagert unter mindestens nahezu Formschluß verschiebbar im Kanal (1).

Der Kanal (1) weist im Saug- und Folien-Zuführbereich auf einem Teil seiner Länge an beiden sich gegenüberliegenden Kanalseiten und an der unteren Kanalseite eine den Kanal (1) U-förmig umfassende Saugkammer (8) auf, an die unten oder seitlich ein Rohrstutzen (9) des ersten Saugluftanschlusses (3) angeschlossen ist; an der oberen Kanalseite zeigt der Kanal (1) eine zweite, separate Saugkammer (10), an die ein Rohrstutzen (11) des zweiten Saugluftanschlusses (2) angeschlossen und durch die der Folien-Zuführanschluß (4) mit einem Rohrstutzen (12) hindurch bis zum Kanal (1) geführt ist und im Kanal (1) einmündet.

Der obere Saugluftanschluß (2) liegt mit Abstand zum Folienzuführanschluß (4), und zwar vorzugsweise in Preßrichtung (A) hinter dem Anschluß (4).

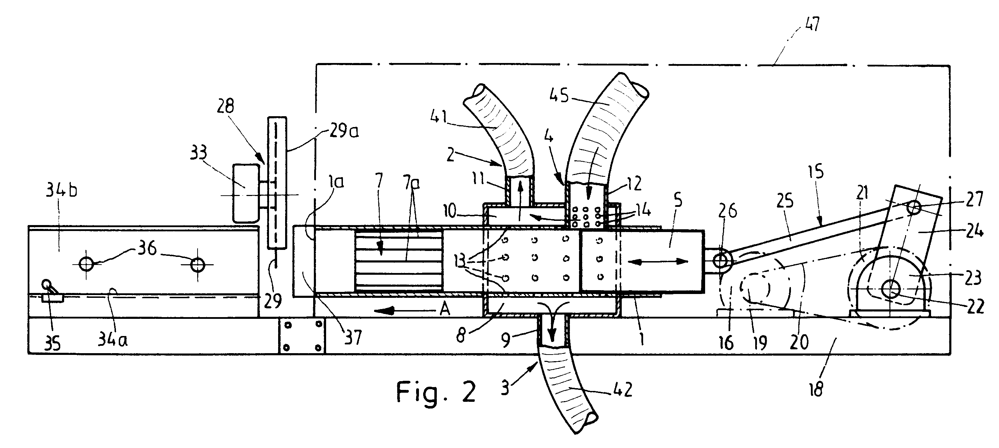

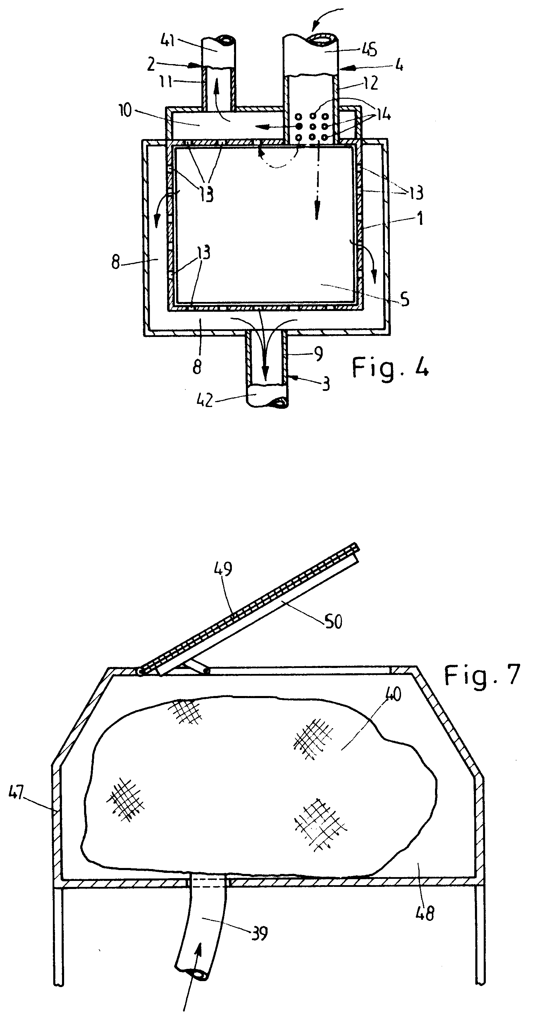

Der Kanal (1) ist mit beiden separaten Saugkammern (8,10) durch in der Kanalwandung ausgenommene Löcher (13) verbunden und der Folien-Zuführanschluß (4) hat in der oberen Saugkammer (10) auf dem Umfang seines Rohrstutzens (12) Löcher (14) zur Saugluftverbindung mit der oberen Saugkammer (10) -vgl. Fig. 2 und 4-.

Der Preßkolben (5) wird über einen Kurbeltrieb (15), von einem elektrischen Getriebemotor (16) aus unter Zwischenschaltung eines Umschlingungstriebes (17) angetrieben.

Dieser Preßkolbenantrieb (15,16) -vgl. Fig. 2,3,5- ist in einem Längenendbereich der Vorrichtung angeordnet; auf einem fahrbaren Gestell (18) lagert der elektrische Getriebemotor (16), dessen Antriebszahnrad (19) mit einer Kette (20) und einem zweiten Zahnrad (21) den Umschlingungstrieb (17) bildet. Das Zahnrad (21) sitzt auf einer Welle (22), die in auf dem Gestell (18) festgelegten Stehlagern (23) drehbar lagert und mit Kurbelhebeln (24) bewegungsstarr verbunden ist. Eine Kurbelstange (25) des Kurbeltriebes (15) ist mit einem Längenende in einer Gelenkachse (26) mit dem Preßkolben (5) und mit dem anderen Längenende in einer zweiten Gelenkachse (27) mit den Kurbelhebeln (24) verbunden.

Der umschaltbare Getriebemotor (16) verschwenkt die Kurbelhebel (24) über die Drehachse (22) hin- und her, wodurch die Kurbelstange (25) und somit der Preßkolben (5) ebenfalls hin- und herbewegt werden.

Die elektrische Heizeinrichtung (7) ist von mehreren im Abstand zueinander in Kanal-Längsrichtung verlaufenden und um den gesamten Kanalquerschnitt im Kanal (1) angeordneten Heizdrähten oder -bändern (7a) gebildet.

Es besteht auch die Möglichkeit, die elektrische Heizeinrichtung (7) von einer den Innenumfang des Kanales (1) umfassenden Rundumheizung in Form einer Heizmanschette zu bilden. Die Heizeinrichtung (7) erstreckt sich mit Abstand hinter den Saugkammern (8,10) auf einem Längenteil des Kanales (1) und endet mit Abstand vor dem Strang-Austritt (1a).

Diesem Strang-Austrittsstirnende (1a) des Kanales (1) ist eine den gebildeten Kunststoffmassestrang (6) in Strangstücke abschneidende Säge (28) zugeordnet, welche von einer motorisch angetriebenen Kreissäge gebildet ist, deren Kreisblatt (29) mit Schutzverkleidung (29a) und Antrieb (30) an einem um eine waagerechte Achse (31) und mittels eines Huborganes (32), wie Druckmittelzylinder oder motorisch angetriebene Gewindespindel, zum Strangabschneiden höhenverschwenkbaren Schwenkbalken (33) lagert (Fig. 2,3, 6).

In Verlängerung des Kanales (1) ist in Strang-Preßrichtung (A) hinter der Säge (28) eine das abgeschnittene Strangstück aufnehmende Führung (34) mit einem auf die abzuschneidende Stranglänge einstellbaren, die Säge (28) einschaltenden Endschalter (35) und mindestens einen das abgeschnittene Strangstück quer zu seiner Längsrichtung aus der Führung (34) herausbewegbaren Auswerfer (36) angeordnet (Fig. 1, 2,3,6). Die Führung (34) ist von einem C-Profil gebildet, in dessen unteren, die Strangauflage bildenden C-Schenkel (34a) der Endschalter (35) angeordnet ist und durch dessen aufrechten C-Steg (34 b) greifen zwei Druckmittelzylinder mit ihren Kolbenstangen als Auswerfer (36) zum seitlichen Herausschieben des abgeschnittenen Strangstückes aus der Führung (34).

An das Kanalstirnende (1a) schließt sich seitlich ein Führungslappen (37) an, der den austretenden Strang (6) an der geöffneten C-Seite der Führung (34) in dieselbe hineinführt.

An die Säge (28) ist eine Absaug-Druckleitung (38,39) zur Abführung der beim Strangtrennen entstehenden Span- und Staubteile in einem Auffangsack (40) angeschlossen.

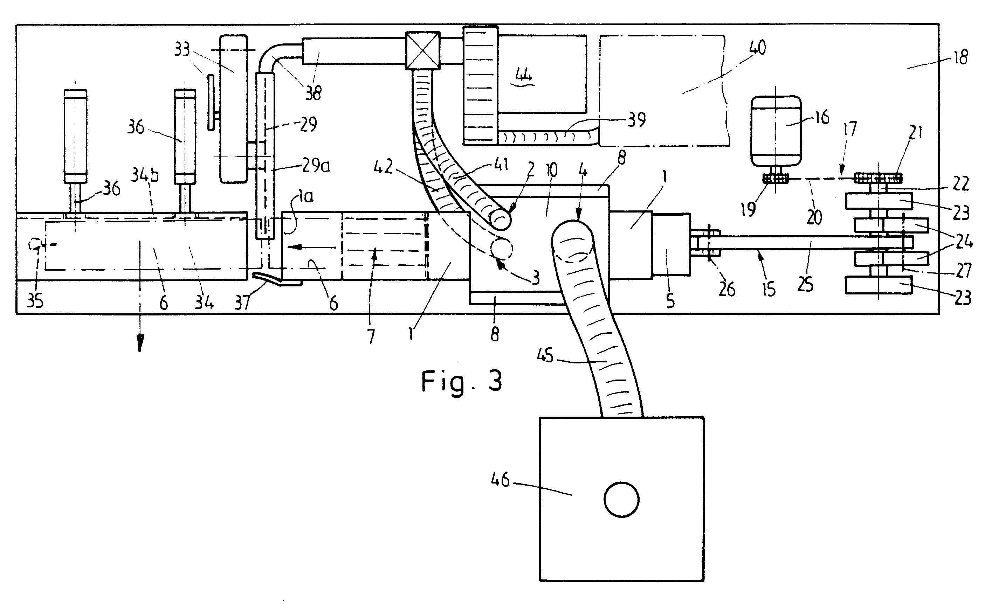

Die beiden Saugluftanschlüssen (2,3) sind über an ihre Rohrstutzen (9,11) angeschlossene Schlauchleitungen (41, 42) und ein Steuerventil (43) an ein Saug-Druckgebläse (44) und die Sägen-Absaugleitung (38) ist über das Steuerventil (43) an das Saug-Druckgebläse (44) und vom Saug-Druckgebläse (44) über eine Druckleitung (39) an dem Auffangsack (40) angeschlossen (Fig. 3).

Der Folien-Zuführanschluß (4) ist über vom Rohrstutzen (12) abgehende Schlauchleitung (45) lösbar mit einem die Folien und Folienabfälle aufnehmenden Einwurfkasten (46) verbunden.

Zum Strangpressen wird das Saug-Druckgebläse (44) eingeschaltet und es werden die Folien und Folienabfälle in den Kasten (46) eingeworfen. Über die Leitungen (41,42) der Sauganschlüsse (2,3) wird durch die Saugluft in den Saugkammern (8,10) und somit im Kanal (1) ein Vakuum erzeugt, durch das die Folien und die Folienabfälle durch die Leitung (42) und den Zuführanschluß (4) in den Kanal (1) hineingezogen werden.

Der durch den Antrieb (15,16) bewegte Preßkolben (1) wird im Kanal (1) hin- und herverschoben und bei jedem Hub in Preßrichtung (A) wird die Folien im Kanal (1) in Richtung Heizung (7) verschoben. Bei dieser ständigen Verschiebung des Kolbens (1) und das Eintreten neuer Folie wird diese Folie verdichtet und beim Durchlauf durch die Heizung (7) zu dem Folienstrang verschweißt.

Der Folienstrang (6) wird aus dem Kanal (1) herausgedrückt und in die Führung (34) hineinbewegt.

Erreicht der Folienstrang (6) den auf die gewünschte Folienstücklänge eingestellten Endschalter (35), dann schaltet dieser die Kreissäge (28) ein und diese verschwenkt nach unten und durchtrennt mit ihrem Sägeblatt (29) den Folienstrang (6). Danach schwenkt die Säge (28) wieder nach oben und nun schieben die Auswerfer (36) das abgeschnittene Strangstück aus der Führung (34) seitlich heraus.

Während die Kreissäge (28) arbeitet, werden die anfallenden Späne und Staubteile vom Sägeblatt (29) durch die Leitung (38) abgesaugt und über die Druckleitung (39) zum Späne-Staubsack (40) gefördert.

Ist das Strangstück aus der Führung (34) herausgeworfen worden, tritt der Folienstrang (6) wieder in die Führung (34) ein und dann erfolgt der gleiche Säge- und Auswerfervorgang.

Durch den sich hin- und herverschiebenden Preßkolben (5) und die Anordnung der Sauganschlüsse (2,3), der Saugkammern (8, 10) sowie die Anordnung und Ausbildung der Folienzuführanschlüsse (4) wird eine besondere Saugluft- und Folienzuführ-Steuerung erreicht, die wie folgt abläuft:

1. Ist der Kolben (1) zurückgefahren, dann sind alle drei Anschlüsse (2,3,4) voll freigegeben und beide Sauganschlüsse (2,3) wirken über die Saugkammern (8,10) voll ein, der Kanal (1) wird unter größtem Vakuum versetzt und die Folien und Folienabfälle durch den Anschluß (4) in den Kanal (1) eingesogen.

2. Ist der Kolben (1) in Richtung (A) ganz nach vorn gefahren, dann wird der untere oder seitliche Saugluftanschluß (3) abgesperrt, da der Kolben (5) alle Löcher (13) -in der oberen Wand, den Seitenwänden und der unteren Wand- des Kanales (1) verschließt und somit die Saugkraft in der U-förmigen Saugkammer (8) nicht mehr wirken kann; die U-Kammer (8) steht zwar durch den Sauganschluß (3) unter Vakuum kann aber durch die abgesperrten Löcher (13) des Kanales (1) im Kanal (1) nicht wirken; der obere Sauganschluß (2) bleibt wirksam und versetzt die obere Kammer (10) weiter unter Vakuum und durch dieses Vakuum wird auf den Folienzuführanschluß (4) weiter Saugkraft ausgewirkt, da die Löcher (14) im Rohrstutzen (12) mit der oberen Kammer (10) in Verbindung stehen, so daß hierdurch Folien und Folienabfälle im Rohrstutzen (14) gegen den den Kanal absperrenden Kolben (5) gesaugt werden und dadurch immer ein sogenannter Folienvorrat im Rohrstutzen (12) in Pfropfenform gebildet wird, was beim Zurückfahren des Kolbens (5) keine Unterbrechung ergibt.

3. Beim Vor- und Zurückfahren des Kolbens (5) werden die Löcher (13) im Kanal (1) durch den Kolben (5) allmählich geschlossen bzw. geöffnet und somit die U-Kammern (8,) in ihrer Saugwirkung auf den Kanal (1) unterbrochen bzw. freigegeben bzw. die obere Kammer (10) in ihrer Saugwirkung auf den Kanal (1) und den Rohrstutzen (12) dessen Löcher (14)- eingestellt.

Der elektrische Getriebeantrieb (16), das Saug-Druckgebläse (44), der Kanal 81), die Saug-Anschlüsse (2,3) mit Leitungen (41,42) und Steuerventil (43), die Säge (28) und die Führung (34) sind auf/an dem fahrbaren Gestell (18) gelagert und diese Bauteile werden bis auf die Säge (28) und Führung (34) von einer Verkleidung (47) überdeckt (Fig. 1). In einer Wanne (48) der Verkleidung (47) ist der Auffangsack (40) herausnehmbar untergebracht und in diese Wanne (48) ist der Druckschlauch (39) bis zum Sack (40) hineingeführt. Diese Verkleidung (47) hat einen die Wanne (48) verschließenden und freigebenden Deckel (49) mit Lüftungslöchern und hält innenseitig eine auswechselbare Filtermatte (50).

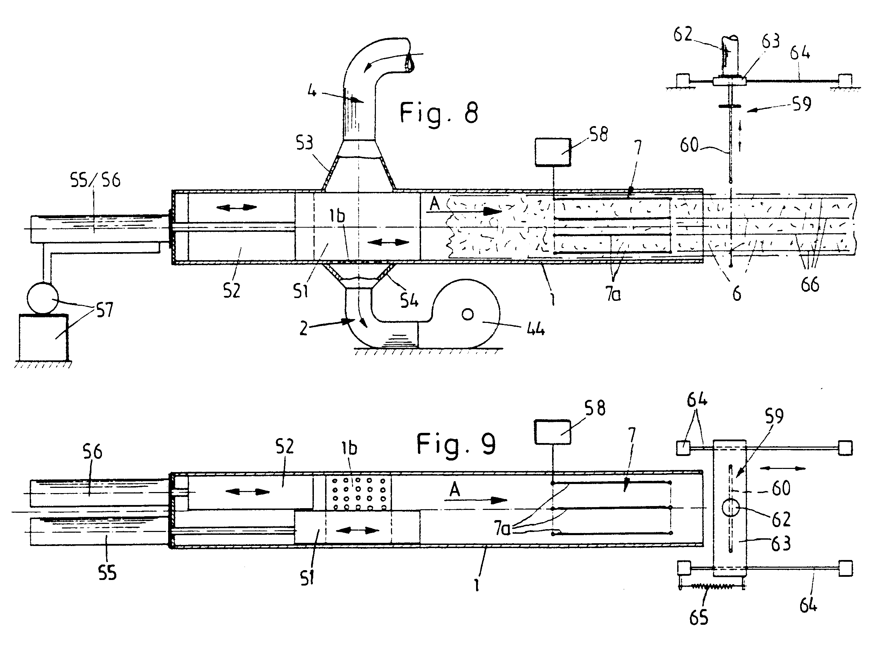

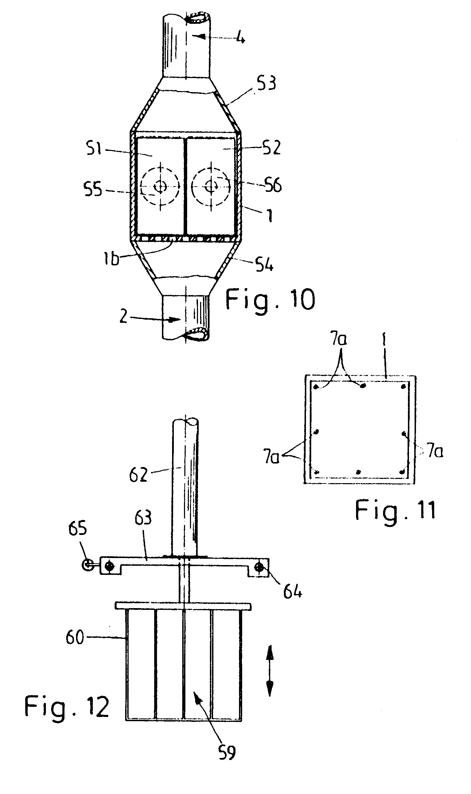

Die Fig. 8 bis 12 zeigen eine abgeänderte Ausführung der Kompaktiervorrichtung, welche nachfolgend beschrieben wird und wobei für gleiche Bauteile auch gleiche Bezugszahlen wie in Fig. 1 bis 7 verwendet werden.

Bei dieser Vorrichtung ist der Steuerkolben (5) im Kanal (1) in zwei Steuerkolben (51,52) aufgeteilt, die wechselweise hin- und herschiebbar im Kanal (1) lagern.

Der Kanal (1) besitzt nur einen Saugluftanschluß (2) und einen Folien-Zuführanschluß (4); beide Anschlüsse (2,4) werden von den beiden Kolben (51,52) wechselweise teilweise überdeckt und teilweise freigegeben. Die beiden Kolben (51,52) sind in dem Vierkantrohr-Kanal (1) formschlüssig verschiebbar gelagert und nehmen jeweils einen halben Kanal-Querschnitt ein.

Der Saugluftanschluß (2) und der Folien-Zuführanschluß (4) liegen sich gegenüber und die Trennung der beiden Preßkolben (51,52) ist parallel zu der Anschluß-Strömrichtung beider Anschlüsse (2,4) vorgesehen.

Beide Anschlüsse (2,4) sind von Rohren gebildet, die über trichterförmige Erweiterungen (53,54) an zwei gegenüberliegenden Vierkantseiten, sich koaxial gegenüberliegend in den Kanal (1) einmünden.

Der Kanal (1) ist im Bereich der trichterförmigen Erweiterung (54) des Saugluftanschlusses (2) als Lochblech oder Luftgitter (1b) ausgebildet.

An dem Saugluftanschluß (2) ist ein Sauggebläse (44) angeschlossen. Die beiden Preßkolben (51,52) sind mit je einem an einem Stirnende des Kanals (1) angeflanschten Druckmittelzylinder (55,56) bewegungsmäßig gekoppelt und beide Druckmittelzylinder (55,56) werden über eine Druckmittelpumpe (57), vorzugsweise Hydraulikpumpe, betätigt.

Die elektrische Heizeinrichtung (7) ist, (wie auch bei Fig. 1 bis 7) an ein Heizaggregat (58) angeschlossen.

Im Abstand hinter dem hinter der Heizeinrichtung (7) liegenden Stirnende des Kanals (1) ist eine quer zur Längsrichtung des Kanals (1) verfahrbare, den gebildeten Kunststoffmassestrang (6) in Teilstücke abschneidende elektrische Trenneinrichtung (59) in Form eines Heizdraht- oder Heizbandgatters (60) angeordnet.

Die Trenneinrichtung (59) ist in Kanal-Längsrichtung und somit Strangpreßrichtung (A) mit dem Kunststoffmassestrang (6) auf einem begrenzten Weg zum Abtrennen verfahrbar; das Heizdraht- oder Heizbandgatter (60) ist mittels eines Druckmittelzylinders (62) in Höhenrichtung senkrecht zum Kanal (1) auf- und abfahrbar an einem Schlitten (63) gehalten, mit dem das Gatter (60) in Längsrichtung des Kanales (1) auf einem begrenzten Weg von dessen Stirnseite weg und wieder zurück an Führungen (64) verschiebbar lagert. Zwischen Schlitten (63) und Führung (64) ist ein Rückholorgan (65), wie Zugfeder, oder ein Puffer angeordnet, durch das/den das Gatter (60) nach dem Strangdurchtrennen und Hochfahren wieder zur Stirnseite des Kanals (1) zurückgefahren wird.

Die beim Auspacken von Bekleidungsstücken anfallenden, schlauchförmigen Kunststoffolien und die beim Verpacken der Bekleidungsstücke in schlauchförmige Kunststoffolien entstehenden Folienabfällen werden dem Zuführanschluß (4) zugeführt, aus dem sie durch den Saugluftanschluß (2) in den Kanal (1) hineingesaugt werden. Die wechselweise hin- und herschiebenden Preßkolben (51,52) drücken die Folien und Folienabfälle in Richtung Heizeinrichtung (7) und durch diese hindurch, wobei die Heizdrähte oder -bänder (7a) eine Verschmelzung der Folien und -abfälle ergeben.

Da beim Zusammenschmelzen der Folien und -abfälle die Heizeinrichtung (7) eine gewisse Rückhaltekraft ergibt und die Preßkolben (51,52) ständig neue Folien und -abfälle in Richtung Heizeinrichtung (7) schieben, wird ein dichtes Zusammenpressen der Folien und -abfälle zu einem kompakten, dichtgepreßten Strang (6) erreicht, was auch bei dem einteiligen Kolben (5) nach Fig. 1 bis 7 der Fall ist.

Der gepreßte und verschmolzene Kunststoffstrang (6) tritt aus dem Kanal (1) aus und wird dann bei einer gewissen Länge, z.B. der eine Europalette entsprechenden Stranglänge, durch die Trenneinrichtung (59) abgeschnitten, in dem das elektrisch beheizte Gitter (60) nach unten durch den Strang (6) geschoben wird und gleichzeitig mit dem Strang (6) mitfährt und dadurch durch Schmelzen den Kunststoffstrang (6) durchtrennnt.

Durch die wechselweise hin- und herfahrenden Preßkolben (51,52) ist immer der halbe Querschnitt der Anschlußtrichter (53,54) frei, so daß ständig auf dem halben Querschnitt (Fläche) wechselweise Saugluft ansteht und die Folien und -abfälle in den Kanal (1) eingesaugt und von den Preßkolben (51,52) wechselweise beaufschlagt und zur Heizeinrichtung (7) gepreßt werden.

Durch die längslaufenden Heizdrähte oder -bänder (7a) werden die zusammengepreßten Folien und -abfälle mit längslaufenden Schmelz- und Schweißnähten (66) zu dem Strang (6) zusammengehalten und durch das Gatter (60) der Trenneinrichtung (59) werden auch die Stirnenden des Stranges (6) beim Abtrennen durch Schmelz- und Schweißnähte verschlossen, so daß eine kompakte Kunststoffmasse erreicht wird.

**Patentansprüche**

1. Vorrichtung zur Bildung einer kompakten Kunststoffmasse aus gebrauchten Kunststoffolien und/oder Kunststoffolien-Abfällen, gekennzeichnet durch einen mindestens einen Saugluftanschluß (2,3) und einen Folien-Zuführanschluß (4) aufweisenden, langgestreckten Kanal (1), in dem ein hin- und herverschiebbarer, die beiden Anschlüsse (2,3/4) im Wechsel freigebender und den Folien-Zuführanschluß (4) voll und den Saugluftanschluß (2,3) teilweise absperrender Preßkolben (5/51,52) und in Kolben-Preßrichtung (A) im Abstand dahinter eine elektrische, die Folien und -abfälle im Durchlauf zu einen gepreßten Strang (6) zusammenschmelzende Heizeinrichtung (7) als Schweißorgan angeordnet sind.

2. Vorrichtung nach Anspruch 1, dadurch gekennzeichnet, daß der Kanal (1) von einem Vierkantrohr, vorzugsweise Quadratrohr, gebildet ist und der Preßkolben (5) unter mindestens nahezu Formschluß darin verschiebbar lagert.

3. Vorrichtung nach Anspruch 1 und 2, dadurch gekennzeichnet, daß der Kanal (1) im Saug- und Folien-Zuführbereich auf einem Teil seiner Länge an beiden sich gegenüberliegenden Kanalseiten und an der unteren Kanalseite eine den Kanal (1) U-förmig umfassende Saugkammer (8) aufweist, an die unten oder seitlich ein Rohrstutzen (9) eines Saugluftanschlusses (3) angeschlossen ist,
und an der oberen Kanalseite eine zweite, separate Saugkammer (10) besitzt, an die ein Rohrstutzen (11) eines zweiten Saugluftanschlusses (2) angeschlossen und durch die der Folien-Zuführanschluß (4) mit einem Rohrstutzen (12) hindurch bis zum Kanal (1) geführt ist und im Kanal (1) einmündet.

4. Vorrichtung nach einem der Ansprüche 1 bis 3, dadurch gekennzeichnet, daß der Kanal (1) mit beiden separaten Saugkammern (8,10) durch in der Kanalwandung ausgenommene Löcher (13) verbunden ist und der Folien-Zuführanschluß (4) in der oberen Saugkammer (10) auf dem Umfang seines Rohrstutzens (12) Löcher (14) zur Saugluftverbindung mit der oberen Saugkammer (10) hat.

5. Vorrichtung nach einem der Ansprüche 1 bis 4, dadurch gekennzeichnet, daß der Preßkolben (5) über einen Kurbeltrieb (15) von einem elektrischen Getriebemotor (16) unter Zwischenschaltung eines Umschlingungstriebes (17) vorzugsweise Kette (20) und Zahnräder (19,21), angetrieben ist.

6. Vorrichtung nach einem der Ansprüche 1 bis 5, dadurch gekennzeichnet, daß die elektrische Heizeinrichtung (7) von mehreren im Abstand zueinander in Kanal-Längsrichtung verlaufenden und um den gesamten Kanalquerschnitt im Kanal (1) angeordneten Heizdrähten oder -bändern (7a) gebildet ist.

7. Vorrichtung nach einem der Ansprüche 1 bis 5, dadurch gekennzeichnet, daß die elektrische Heizeinrichtung (7) von einer den Innenumfang des Kanales (1) umfassenden Rundumheizung in Form einer Heizmanschette gebildet ist.

8. Vorrichtung nach einem der Ansprüche 1 bis 7, dadurch gekennzeichnet, daß dem Kanal (1) an seinem Strang-Austrittsstirnende (1a) eine den gebildeten Kunststoffmassestrang (6) in Strangstücke abschneidende Säge (28) angeordnet ist.

9.  Vorrichtung nach einem der Ansprüche 1 bis 8, dadurch gekennzeichnet, daß die Säge (28) von einer motorisch angetriebenen Kreissäge gebildet ist, deren Kreisblatt (29) mit Schutzverkleidung (29a) und Antrieb (30) an einem um eine waagerechte Achse (31) und mittels eines Huborganes (32), wie Druckmittelzylinder oder motorisch angetriebene Gewindespindel, zum Strangabschneiden höhenverschwenkbaren Schwenkbalken (33) lagert.

10. Vorrichtung nach einem der Ansprüche 1 bis 9, dadurch gekennzeichnet, daß in Verlängerung des Kanales (1) in Strang-Preß- und Austrittsrichtung (A) hinter der Säge (28) eine das abgeschnittene Strangstück aufnehmende Führung (34) mit einem auf die abzuschneidende Stranglänge einstellbaren, die Säge (28) einschaltenden Endschalter (35) und mindestens einen das abgeschnittene Strangstück quer zu seiner Längsrichtung aus der Führung (34) herausbewegenden Auswerfer (36) angeordnet ist.

11. Vorrichtung nach einem der Ansprüche 1 bis 10, dadurch gekennzeichnet, daß die Führung (34) von einem C-Profil gebildet ist, in dessen unterem, die Strangauflage bildenden C-Schenkel (34a) der Endschalter (35) angeordnet ist, und durch dessen aufrechten C-Steg (34b) zwei Druckmittelzylinder mit ihren Kolbenstangen als Auswerfer (36) zum seitlichen Herausschieben des abgeschnittenen Strangstückes aus der Führung (34) greifen.

12. Vorrichtung nach einem der Ansprüche 1 bis 11, dadurch gekennzeichnet, daß an die Säge (28) eine Absaugleitung (38,39) zur Abführung der beim Strangtrennen entstehenden Span- und Staubteile in einen Auffangsack (40) angeschlossen ist.

13. Vorrichtung nach einem der Ansprüche 1 bis 12, dadurch gekennzeichnet, daß die beiden Saugluftanschlüsse (2,3) über Schlauchleitungen (41,42) und ein Steuerventil (43) an ein Saug-Druckgebläse (44) und die Sägen-Absaugleitung (38) über das Steuerventil (43) an das Saug-Druckgebläse (44) und vom Saug-Druckgebläse (44) über eine Druckleitung (39) an den Auffangsack (40) angeschlossen sind.

14. Vorrichtung nach einem der Ansprüche 1 bis 13, dadurch gekennzeichnet, daß der Folien-Zuführanschluß (4) über eine Schlauchleitung (42) lösbar mit einem die Folien und Folienabfälle aufnehmenden Einwurfkasten (46) verbunden ist.

15. Vorrichtung nach einem der Ansprüche 1 bis 14, dadurch gekennzeichnet, daß der elektrische Getriebeantrieb (16), das Saug-Druckgebläse (44), der Kanal (1), die Saug-Anschlüsse (2,3) mit Leitungen (41,42) und Steuerventil (43), die Säge (28) und die Führung (34) auf/an einem fahrbaren Gestell (18) gelagert und eine diese Bauteile bis auf die Säge (28) und Führung (34) abdeckende Verkleidung (47) in einer Wanne (48) den Auffangsack (40) aufnimmt, wobei diese Verkleidung (47) einen die Wanne (48) verschließenden und freigebenden Deckel (49) mit Lüftungslöchern und Filtermatte (50) hat.

16. Vorrichtung nach einem der Ansprüche 1,2,6,7 und 14, dadurch gekennzeichnet, daß der Kanal (1) einen Saugluftanschluß (2) und einen Folien-Zuführanschluß (4) aufweist, in dem zwei wechselweise hin- und her verschiebbare, die beiden Anschlüsse (2,4) wechselweise teilweise überdeckende und freigebende Preßkolben (51,52) angeordnet sind, die formschlüssig in dem rohrförmigen Kanal (1) verschiebbar lagern und jeweils einen halben Kanal-Querschnitt einnehmen.

17. Vorrichtung nach Anspruch 16, dadurch gekennzeichnet, daß der Saugluftanschluß (2) und der Folien-Zuführanschluß (4) sich koaxial gegenüberliegen, über trichterförmige Erweiterungen (53,54) in den Kanal (1) einmünden, der Kanal (1) im Bereich der trichterförmigen Erweiterung (54) des Saugluftanschlusses (2) als Lochblech oder Luftgitter (1b) ausgebildet ist, und die Trennung der beiden Preßkolben (51,52) parallel zu der Anschluß-Strömrichtung beider Anschlüsse (2,4) liegt.

18. Vorrichtung nach Anspruch 16 und 17, dadurch gekennzeichnet, daß die beiden Preßkolben (51,52) mit je einem an einem Stirnende des Kanals (1) angeflanschten Druckmittelzylinder (55,56) bewegungsmäßig gekoppelt sind und die Druckmittelzylinder (55,56) an eine Druckmittelpumpe (57), vorzugsweise Hydraulikpumpe, angeschlossen sind.

19. Vorrichtung nach einem der Ansprüche 1 bis 7 und 10 bis 18, dadurch gekennzeichnet, daß in Strangpreßrichtung (A) im Abstand hinter dem hinter der Heizeinrichtung (7) liegenden Stirnende des Kanales (1) eine quer zur Längsrichtung des Kanales (1) bewegbare, den gebildeten Kunststoffmassestrang (6) in Teilstük-

ke abschneidende elektrische Trenneinrichtung (59) in Form eines Heizdraht- oder Heizbandgatters (60) angeordnet ist, welche mit ihrem Heizdraht- oder Heizbandgatter (60) in Kanal-Längsrichtung mit dem Kunststoffmassestrang (6) auf einen begrenzten Weg zum Abtrennen mittels eines Druckmittelzylinders (62) höhenverfahrbar und mit einem Schlitten (63) an Führungen (64) längsverfahrbar -von der Stirnseite des Kanales (1) weg und wieder zurück verfahrbar- ist.

Fig.1

Fig. 2

Fig. 3

Fig. 4

Fig. 7

Fig. 5

Fig. 6

Fig. 8

Fig. 9

EP 0 510 313 A1

Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 166 003 (MASCHINENFABRIK FLUMS AG)<br>* Das ganze Dokument * | 1,6 | B 29 B 17/00<br>B 30 B 9/30<br>B 23 D 47/04<br>B 26 F 3/12 |
| A | | 2-5,7, 16-18 | |
| Y | US-A-4 502 251 (EVERETT)<br>* Das ganze Dokument * | 9-11 | |
| Y | US-A-4 660 449 (LETARTE)<br>* Zusammenfassung; Spalte 5, Zeile 47 - Spalte 6, Zeile 58; Abbildungen 1-2,7 * | 9-11 | |
| A | FR-A-2 564 374 (SOCIETE GREPP)<br>* Seite 3, Zeilen 27-30; Abbildungen * | 1,8 | |
| A | FR-A-1 224 900 (M. MARIUS QUENIN)<br>* Seite 2, Zeilen 17-53; Anspruch 7; Abbildungen * | 1,8 | |
| A | US-A-1 463 094 (THOMAS RIGBY)<br>* Abbildungen * | 1,5 | RECHERCHIERTE SACHGEBIETE (Int. Cl.5) |
| A | PATENT ABSTRACTS OF JAPAN, Band 10, Nr. 336 (M-535)[2392], 14. November 1986; & JP-A-61 140 400 (AMANO CORP.) 27-06-1986<br>* Zusammenfassung * | 16,18 | B 29 B<br>B 30 B<br>B 23 D<br>B 26 F |
| A | EP-A-0 003 467 (MECHANIK MUNTELIER AG)<br>* Zusammenfassung; Seite 1, Zeile 0 - Seite 2, Zeile 33; Seite 5, Zeilen 27-34; Seite 6, Zeilen 14-24; Ansprüche; Abbildungen *<br>---       -/- | 9,12-15 | |

Der vorliegende Recherchenbericht wurde für alle Patentansprüche erstellt

| Recherchenort | Abschlußdatum der Recherche | Prüfer |
|---|---|---|
| DEN HAAG | 10-08-1992 | JENSEN K.S. |

EPO FORM 1503 03.82 (P0403)

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

siehe Seite -B-

☒ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind.

nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen.

nämlich Patentansprüche:

Europäisches
Patentamt

**EUROPÄISCHER RECHERCHENBERICHT**

Nummer der Anmeldung

EP 92 10 2239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 536 145 (SAWYER et al.)<br>* Das ganze Dokument *<br>----- | 19 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 10-08-1992 | JENSEN K.S. |

EPO FORM 1503 03.82 (P0403)

Europäisches
Patentamt

EP 92 10 2239 -B-

## MANGELNDE EINHEITLICHKEIT DER ERFINDUNG

Nach Auffassung der Recherchenabteilung entspricht die vorliegende europäische Patentanmeldung nicht den Anforderungen
an die Einheitlichkeit der Erfindung; sie enthält mehrere Erfindungen oder Gruppen von Erfindungen,
nämlich:

1. Patentansprüche 1-8, 16-18: Vorrichtung zur Bildung
   einer kompakten Kunststoffmasse aus gebrauchten
   Kunststofffolien.

2. Patentansprüche 9-15,19: Trenneinrichtung.